**Europäisches Patentamt**

**European Patent Office**

**Office européen des brevets**

(11) Veröffentlichungsnummer : **0 365 793 B1**

(12) **EUROPÄISCHE PATENTSCHRIFT**

(45) Veröffentlichungstag der Patentschrift :
**11.11.92 Patentblatt 92/46**

(51) Int. Cl.⁵ : $F02M\ 17/04$, $F02M\ 31/04$

(21) Anmeldenummer : **89116300.8**

(22) Anmeldetag : **04.09.89**

(54) **Vorrichtung zum Erwärmen der Ansaugluft einer Brennkraftmaschine.**

(30) Priorität : **11.10.88 DE 3834559**

(43) Veröffentlichungstag der Anmeldung :
**02.05.90 Patentblatt 90/18**

(45) Bekanntmachung des Hinweises auf die
Patenterteilung :
**11.11.92 Patentblatt 92/46**

(84) Benannte Vertragsstaaten :
**DE FR GB IT**

(56) Entgegenhaltungen :
**DE-A- 2 949 152**
**DE-A- 3 610 332**

(56) Entgegenhaltungen :
**PATENT ABSTRACTS OF JAPAN Band 11, Nr.**
**105 (M-577)(2552), 3. April 1987; JP-A-61252863**
**PATENT ABSTRACTS OF JAPAN Band 11, Nr.**
**105 (M-577)(2552), 3. April 1987; JP-A-61252861**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Zeller, Dieter, Dr. Dipl.-Chem.**
**Hegaustrasse 37**
**W-7000 Stuttgart 30 (DE)**
Erfinder : **Höchsmann, Günther, Dipl.-Ing.**
**Schillerstrasse 17**
**W-7126 Sersheim (DE)**

EP 0 365 793 B1

**Beschreibung**

Die Erfindung betrifft eine Vorrichtung nach dem Oberbegriff des Patentanspruches 1.

Der Kaltstart einer Brennkraftmaschine ist mit geladener Batterie bei Lufttemperaturen von bis zu -30° C ohne Probleme möglich. Bei Temperaturen unterhalb von -30° C oder beim Unterschreiten der für den jeweils verwendeten Kraftstoff gültigen Kaltstarttemperatur ist die Vorwärmung der Ansaugluft notwendig, damit die zur Bildung eines zündfähigen Gemisches notwendige Kraftstoffmenge verdampfen kann.

Aus der JP-A-61 25 2863 ist eine Vorrichtung zur Erwärmung der durch eine Leitung bei einem Kaltstart zu einer Brennkraftmaschine strömenden Ansaugluft bekannt, die stromauf eines Drosselorganes eine Verzweigung aufweist. Diese Verzweigung führt die Ansaugluft bei geschlossenem Drosselorgan durch eine mit einem porösen Stoff gefüllte Erwärmungskammer, in die aus einem absperrbaren Vorratsbehälter ein Fluid eine exotherme Reaktion mit dem Stoff verursachend eingebracht wird.
Als Fluid wird Wasserstoff, als poröser Stoff ein Metallhydrid verwendet. Nach dem Erwärmen ist der Vorratsbehälter abgesperrt und das Drosselorgan geöffnet.

Aufgabe der vorliegenden Erfindung ist es, eine Vorrichtung zum Erwärmen der Ansaugluft bei einem Kaltstart einer Brennkraftmaschine zu schaffen.

Die Lösung dieser Aufgabe gelingt mit den Merkmalen des Patentanspruches 1. Vorteilhafte Ausgestaltungen der Erfindung sind durch die Merkmale der Unteransprüche gekennzeichnet.

Diese Vorrichtung ermöglicht es, bei einer gattungsgemäßen Vorrichtung die Erwärmungskammer abzusperren und dabei das Drosselorgan mit einem Bypaß zu umgehen, welcher ein weiteres Absperrventil aufweist. Vorteilhafterweise kann mit dieser Anordnung ein weiteres Durchströmen der Erwärmungskammer nach dem Erreichen einer ausreichenden Betriebstemperatur der Brennkraftmaschine verhindert werden. Anderenfalls würden sich polare Wassermoleküle, die in der Ansaugluft aus der Umgebung als Feuchtigkeit mitgeführt werden, auf dem porösen Stoff anlagern und dadurch den Kontakt mit dem Fluid bei einem erneutem Kaltstart verhindern. Der absperrbare Bypaß verhindert bei normalem Betrieb der Brennkraftmaschine und geschlossenem Drosselorgan ein Absterben der Brennkraftmaschine.

Eine vorteilhafte Vorrichtung, die auch eine weitere Nutzung des für die Ansauglufterwärmung benötigten Fluids zuläßt, ist in den Unteransprüchen benannt.

In einer weiteren Ausbildung der Erfindung wird die Erwärmungskammer nach dem Anlassen der Brennkraftmaschine mit heißen Abgasen beaufschlagt. Dadurch desorbiert das an der Oberfläche des porösen Stoffes abgelagerte Fluid, das durch ein geringes Druckgefälle in den Ansaugweg zurückströmt und somit bei Verwendung eines geeigneten Fluids dem Verbrennungsprozeß in der Brennkraftmaschine dienen kann. Dadurch steht die Oberfläche des Zeoliths für weitere Kaltstarts zur Verfügung.

Im folgenden wird die Erfindung anhand von Zeichnungen näher erläutert. Es zeigt

Fig. 1 schematisch eine erste Ausführung der Erfindung und

Fig. 2 schematisch eine Weiterbildung der in Fig. 1 gezeigten Ausführung.

Eine Brennkraftmaschine 1 wird durch eine Leitung 2 mit Ansaugluft versorgt. Ist die Brennkraftmaschine 1 in Betrieb, durchströmt die angesaugte Luft einen Luftfilter 3 und anschließend ein stellbares Drosselorgan 4, bevor sie in die Brennkraftmaschine 1 eintritt. Der Abgasstrom 5 tritt an einer Öffnung 6 aus. Wird der Anlaßschalter 7 der Brennkraftmaschine 1 betätigt, registriert ein Steuergerät 8 zunächst die von einem ersten Temperatursensor 9 gemeldete Ansauglufttemperatur. Unterschreitet diese einen einstellbaren Grenzwert, verschließt das Drosselorgan 4 den direkten Ansaugweg und die Ansaugluft wird durch eine Verzweigung 25 geleitet, die stromauf des Drosselorganes 4 abzweigt und stromab erneut in die Leitung 2 einmündet.

In der Verzweigung 25 ist ein das Drosselorgan 4 umgehender, mit einem ersten Absperrventil 10 versehender Bypaß 26 angeordnet, zu dem parallel eine Erwärmungskammer 13 angeordnet ist, die wiederum mit einem Absperrventil 11 absperrbar ist.

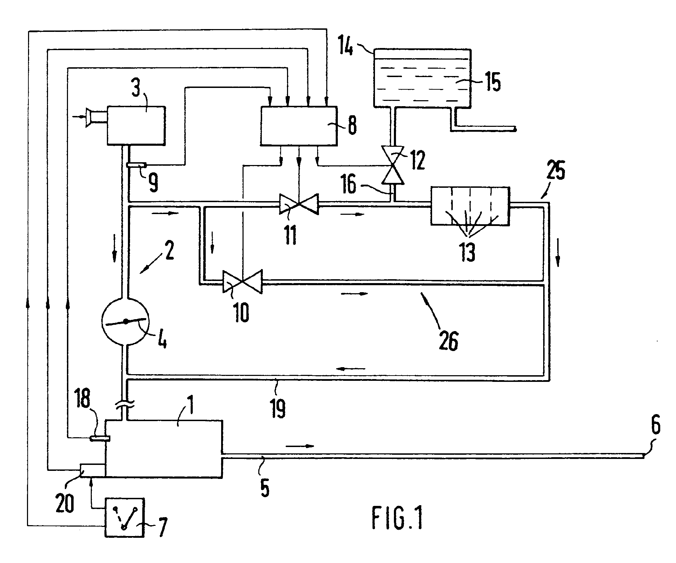

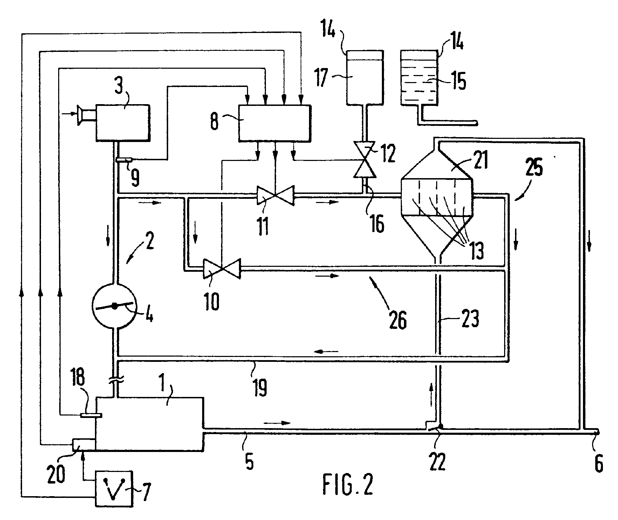

Das Steuergerät 8 verschließt das erste Absperrventil 10 und öffnet das zweite Absperrventil 11 sowie ein Einspritzventil 12. Die Ansaugluft strömt in diesem Fall zunächst durch den Luftfilter 3, das zweite Absperrventil 11, die Erwärmungskammer 13 und hinter dem verschlossenen Drosselorgan 4 zurück in den Ansaugtrakt 2. Vor dem Eintritt in die Erwärmungskammer 13 wird aus einem Vorratsbehälter 14 ein Fluid (Flüssigkeit 15; Gas 17) mit Hilfe des Einspritzventiles 12 durch eine Eintrittsöffnung 16 in den Ansaugluftstrom eingebracht. Der Vorratsbehälter 14 kann gleichzeitig der Kraftstoffbehälter für die Versorgung der Brennkraftmaschine 1 sein. In den in Fig. 1 und Fig. 2 gezeigten Ausführungsformen der Erfindung kann, wie nur in Fig. 2 dargestellt, der Vorratsbehälter 14 mit einem Gas 17 gefüllt sein, das ausschließlich der Ansauglufterwärmung dient. Die Erwärmungskammer 13 ist als auswechselbare Zeolith-Patrone 13 ausgebildet.

Die Zeolithe weisen eine poröse Hohlraumstruktur auf, deren Hohlräume durch Kanäle miteinander verbunden sind. Die innere Oberfläche beträgt ca. 1000 qm/g Zeolith. Aufgrund des Gitteraufbaus sind auf der Zeolithoberfläche Ladungsschwerpunkte räumlich getrennt. Die in dem Ansaugluftstrom fein verteilten Fluidteilchen sind von Natur aus polar ausgebildet und werden an den Ladungsschwerpunkten der Zeolithoberfläche angelagert, d.h. adsorbiert. Dabei wird durch einen an sich bekannten physikalischen Effekt Bindungswärme frei. Diese Wärme wird auf die durch die Hohlräume des Zeoliths strömende Ansaugluft übertragen.

Ein zweiter Temperatursensor 18 meldet dem Steuergerät 8 ständig die Motortemperatur. Erreicht diese Temperatur einen einstellbaren Grenzwert, verschließt das Steuergerät 8 die Absperrventile 10, 11 und das Einspritzventil 12. Weiterhin gibt das Absperrorgan 4 den direkten Ansaugweg frei.

Das zweite Absperrventil 11 schließt die Zeolith-Patrone 13 ab, so daß nach dem Anlassen kein Luftstrom durch diese Patrone 13 und eine Leitung 19 gefördert wird. Anderenfalls würden sich die polaren Wassermoleküle, die in der Ansaugluft aus der Umgebung als Feuchtigkeit mitgeführt werden, auf der Zeolithoberfläche anlagern und diese für eine weitere Adsorption des Fluids (Flüssigkeit 15; Gas 17) blockieren.
Bei abgeschlossener Zeolith-Patrone 13 verhindert der Bypaß 26 ein Absterben der Brennkraftmaschine bei geschlossenem Drosselorgan 4 durch das Öffnen des Ventiles 10.

In der in Fig. 1 gezeigten Ausführung der Erfindung ist die Menge des Zeolithes so bemessen, daß eine bestimmte Anzahl von Kaltstartvorgängen sicher ausgeführt werden kann. Diese wird z. B. über die Anzahl der Betätigungen eines Anlassers 20 durch das Steuergerät 8 registriert. Ist die vorgegebene Anzahl erreicht, wird die Zeolith-Patrone 13 gegen eine neue Patrone ausgetauscht.

In einer Weiterbildung der Erfindung ist die Zeolith-Patrone 13 gemäß Fig. 2 als regenerierbare Patrone 13 in einem Wärmetauscher 21 angeordnet. Als Kraftstoff für die Brennkraftmaschine 1 und als Flüssigkeit 15 wird beispielsweise Methanol verwendet. Nach dem Anlassen der Brennkraftmaschine 1 wird mittels eines Absperrorganes 22 ein Teilstrom des heißen Abgasstromes 5 durch eine Leitung 23 in den Wärmetauscher 21 geleitet. Dort erhitzen die Abgase die Zeolith-Patrone 13, so daß die Flüssigkeitströpfchen von der Zeolithoberfläche desorbieren und durch den in der Leitung 19 herrschenden Unterdruck in die Leitung 2 zurückgeführt werden. Das zuvor gebundene Methanol steht somit dem Verbrennungsprozeß in der Brennkraftmaschine 1 zur Verfügung. Die bei der Adsorption frei gewordene Wärmemenge wird bei der Desorption aus dem Abgasstrom entnommen und steht als Oberflächenenergie des Zeoliths für weitere Adsorptionsprozesse zur Verfügung. Vom Wärmetauscher 21 aus strömt der Teilabgasstrom zurück in den Abgasstrom 5. Die Klappe 22 trennt die Leitung 23 vom Abgasstrom 5 ab, wenn eine zur vollständigen Regenerierung der Zeolith-Oberfläche notwendige Wärmemenge im Wärmetauscher 21

übertragen wurde.

Sollte die von einer Zeolith-Patrone 13 lieferbare Wärmemenge nicht dazu ausreichen, den Ansaugluftstrom auf den erforderlichen Wert zu erwärmen, können in den Ausbildungen der Erfindung gemäß Fig. 1 und Fig. 2 mehrere Zeolith-Patronen 13 in Reihe angeordnet werden, wie in den Figuren gestrichelt dargestellt.

Mit der vorbeschriebenen Erfindung kann unter Ausnutzung eines physikalischen Effektes die Ansaugluft einer Brennkraftmaschine ohne die Beanspruchung von elektrischer Energie oder anderen Fremdenergien für Kaltstartvorgänge erwärmt werden. Auf der Zeolithoberfläche wird das Fluid lediglich angelagert, aber nicht verbraucht. Somit steht das Fluid einer weiteren Nutzung, z.B. im Verbrennungsprozeß der Brennkraftmaschine zur Verfügung, sofern als Fluid ein geeigneter Kraftstoff verwendet wurde.

## Patentansprüche

1. Vorrichtung zum Erwärmen der durch eine Leitung (2) bei einem Kaltstart zu einer Brennkraftmaschine (1) strömenden Ansaugluft, mit einer stromauf eines in der Leitung (2) angeordneten Drosselorganes (4) abzweigenden und parallel zu diesem Drosselorgan (4) liegenden, eine Erwärmungskammer (13) aufweisenden Verzweigung (25),
   wobei aus einem absperrbaren Vorratsbehälter (14) ein Fluid (15; 17) eine exotherme Reaktion verursachend mit einem in der Erwärmungskammer (13) angeordneten porösen Stoff in Kontakt gebracht wird, dadurch gekennzeichnet, daß zwischen einem die Erwärmungskammer (13) absperrenden ersten Absperrventil (11) und der Erwärmungskammer (13) ein das Fluid (Flüssigkeit 15; Gas 17) in die Verzweigung (25) förderndes und den Vorratsbehälter (14) absperrendes Einspritzventil (12) angeordnet ist, und daß in einem das Drosselorgan (4), das erste Absperrventil (11) und die Erwärmungskammer (13) umgehenden Bypaß (26) der Werzweigung (25) ein weiteres Absperrventil (10) angeordnet ist.

2. Vorrichtung nach Anspruch 1, dadurch gekennzeichnet, daß stromauf der Verzweigung (25) ein mit einem Steuergerät (8) verbundener erster Temperatursensor (9) und an der Brennkraftmaschine (1) ein Zweiter Temperatursensor (18) angeordnet ist, und daß die Absperrventile (10, 11) und das Einspritzventil (12) ebenfalls mit dem Steuergerät (8) verbunden sind.

3. Vorrichtung nach Anspruch 1 oder 2, dadurch gekennzeichnet, daß der Vorratsbehälter (14) mit der Erwärmungskammer (13) und der Brennkraftmaschine (1) verbunden ist.

4. Vorrichtung nach Anspruch 1 oder 2, dadurch gekennzeichnet ,daß der in der Erwärmungskammer (13) angeordnete poröse Stoff ein Zeolith ist.

5. Vorrichtung nach Anspruch 4, dadurch gekennzeichnet, daß die Erwärmungskammer (13) aus einer auswechselbaren Zeolith-Patrone (13) besteht.

6. Vorrichtung nach Anspruch 5, dadurch gekennzeichnet, daß die Zeolith-Patrone (13) in einem Wärmetauscher (21) angeordnet ist, welcher mit einer Leitung (23) verbunden ist, die mit einem Absperrorgan (22) an den Abgasstrom (5) der Brennkraftmaschine (1) gekoppelt ist.

7. Vorrichtung nach Anspruch 5 oder 6, dadurch gekennzeichnet, daß mehrere Zeolith-Patronen (13) in Reihe angeordnet sind.

8. Vorrichtung nach Anspruch 3, dadurch gekennzeichnet, daß als Kraftstoff für die Brennkraftmaschine (1) und als Flüssigkeit (15) Methanol verwendet wird.

**Claims**

1. A device for heating the intake air flowing through a pipe (2) to an internal combustion engine (1) during a cold start, with a branch line (25) which branches off upstream of a throttle member (4) arranged in the pipe (2) and lies parallel to the said throttle member (4) and which has a heating chamber (13), a fluid (15; 17) being brought out of a closable storage container (14) into contact with a porous substance present in the heating chamber (13) so as to cause an exothermic reaction, characterized in that an injection valve (12) conveying the fluid (liquid 15; gas 17) into the branch line (25) and closing the storage container (14) is arranged between the heating chamber (13) and a first closure valve (11) closing the heating chamber (13), and a further closure valve (10) is arranged in a by-pass (26) of the branch line (25) passing around the throttle member (4), the first closure valve (11) and the heating chamber (13).

2. A device according to Claim 1, characterized in that a first temperature sensor (9) connected to a control device (8) is arranged upstream of the branch line (25) and a second temperature sensor (18) is arranged on the internal combustion engine (1), and the closure valves (10, 11) and the injection valve (12) are likewise connected to the control device (8).

3. A device according to Claim 1 or 2, characterized in that the storage container (14) is connected to the heating chamber (13) and the internal combustion engine (1).

4. A device according to Claim 1 or 2, characterized in that the porous substance present in the heating chamber (13) is a zeolite.

5. A device according to Claim 4, characterized in that the heating chamber (13) comprises a replaceable zeolite cartridge (13).

6. A device according to Claim 5, characterized in that the zeolite cartridge (13) is arranged in a heat exchanger (21) connected to a pipe (13) connected by a closure member (22) to the exhaust-gas flow (5) of the internal combustion engine (1).

7. A device according to Claim 5 or 6, characterized in that a plurality of zeolite cartridges (13) are arranged in series.

8. A device according to Claim 3, characterized in that methanol is used as the fuel for the internal combustion engine (1) and as the liquid (15).

**Revendications**

1. Dispositif destiné à chauffer, pour un démarrage à froid, l'air d'admission parvenant à un moteur à combustion interne (1), à travers une tuyauterie (2) comportant une dérivation (25), en amont d'un organe d'étranglement (4) monté dans la tuyauterie (2) et s'étendant parallèlement à cet organe d'étranglement (4) et comportant une chambre de chauffage (13), dans lequel un fluide (15 ; 17), provenant d'un réservoir (14) pouvant être fermé, et provoquant une réaction exotherme, est amené en contact avec une matière poreuse placée dans la chambre de chauffage (13), caractérisé en ce qu'il est prévu, entre une première vanne d'arrêt (11) fermant la chambre de chauffage (13) et la chambre de chauffage (13), une soupape d'injection (12) envoyant le fluide (liquide 15 ; gaz 17) dans la dérivation (25) et fermant le réservoir (14) et en ce qu'il est prévu une autre vanne d'arrêt (10) dans un bipasse (26), contournant l'organe d'étranglement (4), la première vanne d'arrêt (11) et la chambre de chauffage (13), de la dérivation (25).

2. Dispositif selon la revendication 1, caractérisé en ce qu'en amont de la dérivation (25) il est prévu une première sonde de température (9) reliée à un appareil de commande (8) et sur le moteur à combustion interne (1) une seconde sonde de température (18) et en ce que les vannes d'arrêt (10, 11) et la soupape d'injection (12) sont également reliées à l'appareil de commande (8).

3. Dispositif selon la revendication 1 ou 2, caractérisé en ce que le réservoir (14) est relié à la chambre de chauffage (13) et au moteur à combustion interne (1).

4. Dispositif selon la revendication 1 ou 2, caractérisé en ce que la matière poreuse placée dans la chambre de chauffage (13) est une zéolithe.

5. Dispositif selon la revendication 4, caractérisé en ce que la chambre de chauffage (13) est constituée d'une cartouche de zéolithe (13) interchangeable.

6. Dispositif selon la revendication 5, caractérisé en ce que la cartouche de zéolithe (13) est placée dans un échangeur de chaleur (21) qui est relié, par une tuyauterie (23), laquelle est accouplée à un organe d'arrêt (22), sur le courant des gaz d'échappement (5) du moteur à combustion interne (1).

7. Dispositif selon la revendication 5 ou 6, caractérisé en ce que plusieurs cartouches de zéolithe (13) sont montées en série.

8. Dispositif selon la revendication 3, caractérisé en ce qu'on utilise du méthanol comme carburant pour le moteur à combustion interne (1) et comme liquide (15).

FIG.1

FIG.2